# DEMANDE DE BREVET EUROPEEN

(11) **EP 2 565 810 A1**
(43) Date de publication de la demande: **06.03.2013**
(21) Numéro de dépôt: 12180413.2
(22) Date de dépôt: 14.08.2012
(51) Int. Cl.: G06F 21/00, G06F 21/70

(54) **Microprocesseur protégé contre le vidage de mémoire**

(30) Priorité: 29.08.2011 FR 1157603
(71) Demandeur: Inside Secure, 13856 Aix-en-Provence Cedex 3 (FR)
(72) Inventeur: Feix, Benoît, 13400 Aubagne (FR); Gagnerot, Georges, 13011 Marseille (FR)
(74) Mandataire: Marchand, André

(57) **Abrégé**

Microprocesseur (MP2) comprenant une mémoire (MA) et une unité centrale (CPU) configurée pour signer un mot binaire (W) écrit dans la mémoire et, lors de la lecture d'un mot binaire dans la mémoire, vérifier la signature du mot binaire et déclencher une action de protection de la mémoire si la signature est invalide. Selon l'invention, l'unité centrale est également configurée pour exécuter une instruction d'écriture dans une zone mémoire d'un mot binaire accompagné d'une signature invalide, afin qu'une lecture ultérieure de la zone mémoire par l'unité centrale déclenche l'action de protection.

## Description

La présente invention concerne un microprocesseur comprenant une mémoire et une unité centrale de traitement configurée pour signer un mot binaire écrit dans la mémoire, vérifier la signature d'un mot lu dans la mémoire et déclencher une action de protection de la mémoire si la signature est invalide.

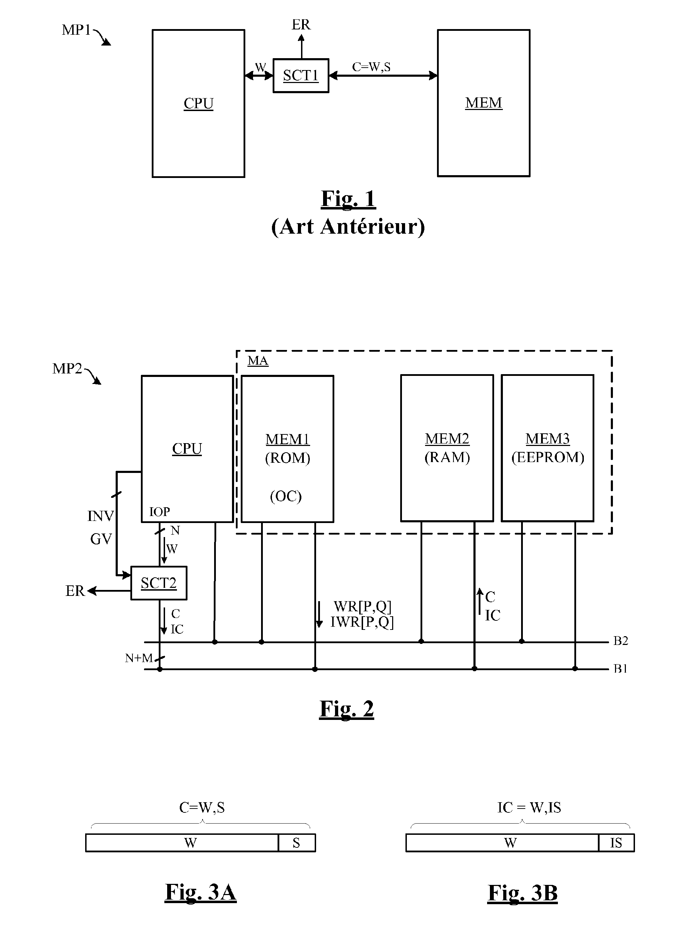

Tel que représenté sur la figure 1, un microprocesseur classique MP1 comprend généralement une unité centrale de traitement ou "CPU" (CPU1) et une mémoire MEM. La mémoire MEM peut comprendre des données secrètes telles que des clés de cryptographie, des certificats de sécurité, etc. Le microprocesseur est donc susceptible d'attaques de la part de fraudeurs cherchant à découvrir ces données, notamment dans le cadre d'applications au paiement (carte bancaire, carte prépayée, porte-monnaie électronique, etc.).

Une attaque connue sous le nom de "vidage de mémoire" ("memory dump") consiste à modifier dynamiquement une instruction de lecture de la mémoire en cours d'exécution par le CPU, par injection de faute ou par perturbation, de manière que celui-ci lise une autre zone mémoire que celle visée par l'instruction ou une zone mémoire plus étendue. Supposons par exemple que l'instruction contienne une adresse de lecture A1 et un paramètre L1 indiquant la longueur d'une chaîne binaire devant être lue à l'adresse A1. L'attaque peut porter sur l'adresse A1 ou le paramètre L1, ou les deux. Le CPU peut donc être amené à lire dans la mémoire une chaîne binaire de longueur L1 à une adresse A2, ou une chaîne binaire de longueur L2 à l'adresse A1, ou encore une chaîne binaire de longueur L2 à une adresse A2. L'observation des données circulant sur un bus permet au fraudeur de découvrir les données présentes dans la zone mémoire concernée. Un autre type d'attaque consiste à prendre le contrôle du CPU au moyen d'un programme malicieux afin de lui faire lire des zones mémoire contenant les données secrètes.

Des contre-mesures logicielles sont généralement prévues, par exemple le fait de mémoriser les paramètres A1 et L1 de l'instruction avant que celle-ci ne soit exécutée, et de vérifier après exécution de l'instruction que l'adresse d'exécution de l'instruction correspond bien à l'adresse A1 mémorisée et que la longueur de la chaîne lue correspond à la longueur L1 mémorisée. Une autre contre-mesure connue consiste à exécuter l'instruction de lecture deux fois et vérifier que la même donnée a été lue. Cependant, ce type de contre-mesure ne permet pas de contrer une attaque sur les paramètres A1, L1 intervenue avant que ceux-ci ne soient mémorisés.

Des contre-mesures matérielles (hardware) sont également généralement prévues. Un exemple classique de contre-mesure matérielle est illustré sur la figure 1. Le CPU est équipé d'un circuit de sécurité SCT1. Lors de l'écriture d'un mot W dans la mémoire MEM, le circuit SCT1 génère une signature S et la concatène avec le mot W pour former une chaîne binaire protégée C=W,S. Lors d'une lecture de la mémoire, l'intégrité de la chaîne binaire C est vérifiée par le circuit SCT1 qui recalcule à cet effet la signature S et la compare à celle présente dans la chaîne binaire. Si la signature est invalide, le circuit SCT1 émet un signal d'erreur ER qui provoque l'exécution d'une action de protection de la mémoire.

Il est fréquent que la signature S ne comprenne qu'un ou plusieurs bits de parité. Par exemple, avec un microprocesseur de 8 bits, des mots W de 8 bits peuvent être stockés en mémoire avec un bit de parité formant la signature S. Avec un microprocesseur de 16 bits, des mots de 16 bits peuvent être stockés avec deux bits de parité formant la signature S, chaque bit de parité étant associé à une partie du mot.

Un bit de parité ne permet toutefois de détecter que des modifications d'un nombre impair de bits dans le mot ou dans la partie du mot associée au bit de parité, et ne permet donc pas de détecter une modification d'un nombre pair de bits qui conduiraient à la même parité. Par exemple, les octets suivants ont la même parité : 10000001, 0000011, 10000111, 10011111,...

Il peut donc être souhaité de renforcer la protection contre le vidage de mémoire d'un microprocesseur comprenant un mécanisme de contrôle de parité, et de façon générale d'un microprocesseur utilisant un procédé de signature ne permettant pas de garantir totalement que les données signées n'ont pas été altérées.

Des modes de réalisation de l'invention concernent un microprocesseur comprenant une mémoire et une unité centrale de traitement configurée pour, lors de l'écriture d'un mot binaire dans la mémoire, générer une signature et écrire le mot binaire accompagné de la signature dans la mémoire, et, lors de la lecture d'un mot binaire dans la mémoire, vérifier la signature accompagnant le mot binaire et, si la signature est invalide, déclencher une action de protection de la mémoire, dans lequel l'unité centrale est configurée pour exécuter une instruction d'écriture dans une zone mémoire d'un mot binaire accompagné d'une signature invalide, afin qu'une lecture ultérieure de la zone mémoire par l'unité centrale déclenche l'action de protection.

Selon un mode de réalisation, la mémoire est une mémoire volatile ou non volatile programmable et effaçable électriquement.

Selon un mode de réalisation, le microprocesseur comprend un circuit de sécurité configuré pour générer une signature valide ou une signature invalide à la demande de l'unité centrale.

Selon un mode de réalisation, la signature comprend au moins un bit de parité qui est fonction de tout ou partie des bits du mot binaire à signer.

Des modes de réalisation de l'invention concernent également un dispositif portatif électronique comprenant un circuit intégré sur plaquette de semi-conducteur, dans lequel le circuit intégré comprend un microprocesseur selon l'invention.

Des modes de réalisation de l'invention concernent également un procédé de protection d'un microprocesseur comprenant une mémoire et une unité centrale de traitement, comprenant les étapes consistant à, lors de l'écriture d'un mot binaire dans la mémoire, générer une signature et écrire le mot binaire accompagné de la signature dans la mémoire, et, lors de la lecture d'un mot binaire dans la mémoire, vérifier la signature accompagnant le mot binaire et, si la signature est invalide, exécuter une action de protection de la mémoire, procédé comprenant en outre une étape consistant à écrire dans une zone mémoire un mot binaire accompagné d'une signature invalide, de telle sorte qu'une lecture ultérieure par l'unité centrale de la zone mémoire déclenche l'action de protection.

Selon un mode de réalisation, la mémoire est une mémoire morte comprenant un programme exécutable par l'unité centrale, et le procédé comprend une étape consistant à préenregistrer dans la mémoire le mot binaire accompagné d'une signature invalide, avant la mise en service de la mémoire.

Selon un mode de réalisation, la mémoire est une mémoire programmable et effaçable électriquement, volatile ou non volatile, et le procédé comprend une étape consistant à utiliser l'unité centrale pour écrire dans la mémoire le mot binaire accompagné d'une signature invalide.

Selon un mode de réalisation, le procédé comprend une étape préliminaire consistant à insérer dans un programme exécuté par l'unité centrale au moins une instruction d'écriture dans la mémoire d'un mot binaire accompagné d'une signature invalide.

Selon un mode de réalisation, la signature comprend au moins un bit de parité qui est fonction de tout ou partie des bits du mot binaire à signer.

Selon un mode de réalisation, l'action de protection comprend au moins l'une des actions suivantes : déclenchement d'une interruption et exécution d'un programme de traitement d'erreur; remise à zéro de l'unité centrale; effacement de tout ou partie de la mémoire; mise hors service temporaire ou définitive de l'unité centrale; mise hors service temporaire ou définitive de tout ou partie la mémoire.

Des modes de réalisation de l'invention concernent également un procédé de configuration d'une mémoire programme non volatile intégrée dans un microprocesseur selon l'invention, comprenant les étapes consistant à concevoir un programme sous forme de code source, transformer le programme en code source en un programme en code objet exécutable par un microprocesseur, générer des signatures et les associer aux mots binaires, et enregistrer le code objet signé dans la mémoire, procédé comprenant une étape d'insertion dans une zone de la mémoire d'au moins un mot binaire accompagné d'une signature invalide, de manière qu'une lecture ultérieure de la zone mémoire par l'unité centrale du microprocesseur déclenche une action de protection de la mémoire.

Selon un mode de réalisation, le procédé comprend les étapes consistant à insérer dans le code source au moins une instruction d'un premier type, et, au moment de la transformation du code source en code objet, exécuter l'instruction du premier type en insérant dans le code objet le mot binaire accompagné de la signature invalide.

Selon un mode de réalisation, le procédé comprend une étape de répartition du code objet dans la mémoire, en laissant au moins une zone mémoire vide, et une étape de génération de mots binaires accompagnés de signatures invalides, et de placement des mots binaires accompagnés des signatures invalides dans la zone mémoire vide.

Selon un mode de réalisation, le procédé comprend les étapes consistant à insérer dans le code source au moins une instruction d'un second type, au moment de la transformation du code source en code objet, transformer l'instruction du second type en une instruction exécutable d'écriture dans une mémoire d'un mot binaire accompagné d'une signature invalide.

Des modes de réalisation de l'invention seront décrits plus en détail et à titre non limitatif dans ce qui suit, en relation avec les figures jointes parmi lesquelles :
- la figure 1 précédemment décrite représente schématiquement un microprocesseur classique,
- la figure 2 représente schématiquement un mode de réalisation d'un microprocesseur comprenant un circuit de sécurité selon l'invention,
- les figures 3A, 3B représentent respectivement une chaîne binaire valide et une chaîne binaire invalide,
- la figure 4 représente schématiquement des emplacements de chaînes binaires invalides dans une mémoire du microprocesseur,
- la figure 5 représente schématiquement un mode de réalisation du circuit de sécurité,
- la figure 6 représente un autre mode de réalisation du circuit de sécurité,
- la figure 7 est un organigramme décrivant un procédé d'insertion de chaînes binaires invalides dans un programme exécutable,
- la figure 8 est une illustration du procédé de la figure 7,
- la figure 9 montre l'architecture générale d'un dispositif portatif électronique comprenant un microprocesseur selon l'invention.

La figure 2 représente schématiquement un mode de réalisation d'un microprocesseur MP2 selon l'invention. Le microprocesseur MP2 comprend une unité centrale de traitement, appelée dans ce qui suit "le CPU", un plan mémoire MA et un circuit de sécurité SCT2. Le plan mémoire est relié au CPU par l'intermédiaire d'un bus de données et d'instructions B1 et un bus d'adresse B2 (dans une variante de réalisation, le microprocesseur pourrait aussi comprendre un bus de données et un bus d'instructions distincts). Le plan mémoire MA comprend ici une mémoire morte MEM1 (mémoire ROM), une mémoire vive MEM2 (mémoire RAM) et une mémoire effaçable et programmable électriquement MEM3, par exemple de type EEPROM. Les mémoires MEM1 et MEM3 sont des mémoires non volatiles tandis que la mémoire MEM2 est une mémoire volatile.

La mémoire MEM1 comprend un programme exécutable par le microprocesseur, stocké dans la mémoire sous forme de code objet. Ce programme exécutable comprend plusieurs couches logicielles qui coopèrent ensemble. On distingue généralement le système d'exploitation du microprocesseur ("Operating System"), une couche d'abstraction matérielle qui commande les divers périphériques et pilotes du CPU (non représentés), et une couche applicative pouvant comprendre un ou plusieurs programmes d'application, par exemple des programmes de transaction bancaire. Par ailleurs, les mémoires MEM1, MEM2, MEM3 peuvent recevoir des données secrètes telles que des certificats, des clés de cryptographie, des clés de session, des données intermédiaires de calcul cryptographique, des données de transaction, etc.

Le circuit de sécurité SCT2 est configuré pour générer, à partir d'un mot binaire W de N bits, une signature S de M bits. Lors de l'écriture du mot W dans le plan mémoire MA, le circuit SCT2 concatène la signature S avec le mot W pour former une chaîne binaire C=W,S d'une longueur de N+M bits qui est appliquée sur le bus B1 avant d'être écrite dans la mémoire.

Lorsque le CPU lit une chaîne binaire C dans le plan mémoire MA, l'intégrité de la chaîne binaire est vérifiée par le circuit SCT2 qui recalcule à cet effet la signature S à partir du mot W contenu dans la chaîne binaire, puis compare la signature recalculée à celle qui est présente dans la chaîne binaire. Si la signature présente dans la chaîne binaire est invalide, le circuit SCT2 émet un signal d'erreur ER qui provoque l'exécution d'une action de protection du plan mémoire.

L'action de protection comprend par exemple l'une des actions suivantes ou une combinaison de ces actions : déclenchement d'une interruption et exécution d'un programme de traitement d'erreur par le CPU, de préférence en mode sécurisé; remise à zéro du CPU; effacement de tout ou partie de la mémoire MEM2 et/ou MEM3; mise hors service temporaire ou définitive du CPU; mise hors service temporaire ou définitive de tout ou partie de l'une ou de chacune des mémoires MEM1, MEM2, MEM3.

Selon l'invention, le CPU est configuré pour décoder et exécuter, en sus d'une instruction classique WR[P,Q] d'écriture d'une chaîne binaire valide C, une instruction IWR[P,Q] d'écriture d'une chaîne binaire invalide IC. Une chaîne binaire valide C, montrée sur la figure 3A, contient un mot binaire W concaténé avec une signature valide S. Une chaîne binaire invalide IC, montrée sur la figure 3B, contient un mot binaire W concaténé avec une signature invalide IS.

Les paramètres P, Q présents dans les instructions WR et IWR peuvent être de différents types, indexé ou non, au choix du concepteur du microprocesseur. Par exemple, le paramètre P peut être la valeur du mot W à écrire dans la mémoire, l'adresse de lecture du mot W à écrire dans la mémoire, ou encore un index vers une adresse mémoire ou vers un registre du CPU contenant le mot à écrire ou l'adresse où se trouve le mot à écrire. De même, le paramètre Q peut être l'adresse d'écriture du mot, ou un index vers une adresse mémoire ou vers un registre contenant l'adresse d'écriture du mot.

Le circuit de sécurité SCT2 est configuré pour générer une signature invalide IS sur demande du CPU, lorsque ce dernier exécute l'instruction spéciale IWR[P,Q]. Dans ce cas, le circuit SCT2 concatène le mot binaire W avec la signature invalide IS et fournit une chaîne binaire invalide IC=W,IS qui est écrite dans le plan mémoire MA par le CPU.

Le programme exécutable présent dans la mémoire MEM1 contient au moins une et de préférence plusieurs instructions IWR[P,Q]. Il est conçu manière à ce que le CPU place des chaînes binaires invalides IC dans le plan mémoire MA à proximité de zones mémoire contenant des données secrètes devant être protégées contre une lecture par vidage de la mémoire.

De préférence, le concepteur du programme exécutable a fait en sorte de placer une chaîne binaire invalide avant et/ou après une zone mémoire à protéger. En effet, une tentative de lecture d'une donnée secrète par vidage de la mémoire n'est jamais parfaitement centrée sur la zone mémoire sensible contenant la donnée secrète, et inclut généralement la lecture de zones mémoire contiguës situées avant et/ou après la zone mémoire sensible. Si les zones mémoire contiguës contiennent des chaînes binaires invalides, une tentative de vidage de la mémoire visant la zone mémoire sensible impliquera la lecture d'une chaîne binaire invalide. Cette lecture entraînera l'émission du signal d'erreur ER par le circuit de sécurité SCT2 et déclenchera l'action de protection, qui interrompra le CPU et empêchera le vidage de la mémoire.

Ainsi, chaque chaîne binaire invalide IC placée dans le plan mémoire MA forme une sorte de "barrière" contre le vidage de la mémoire, et est placée de préférence avant et après une zone mémoire contenant des données à protéger, et de préférence immédiatement avant et immédiatement après cette zone mémoire.

Le concepteur du programme exécutable a fait également en sorte que le CPU ne lise jamais la mémoire aux adresses où il a placé des chaînes binaires invalides. Ces adresses interdites ne sont donc pas susceptibles d'être lues lors d'une exécution normale du programme, et ne peuvent l'être qu'après une injection de faute ou une perturbation qui modifierait une instruction de lecture.

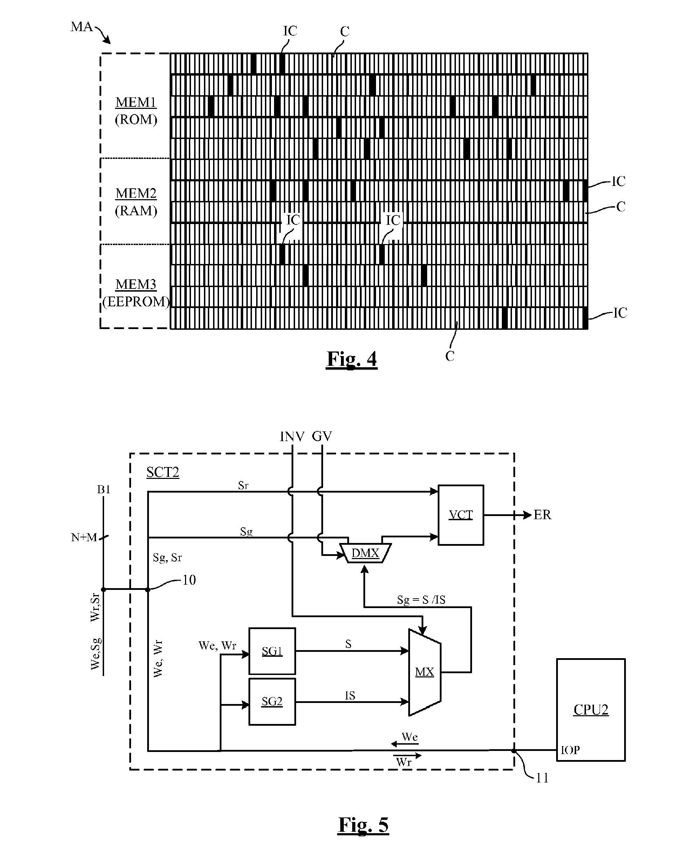

La figure 4 est une représentation simplifiée du contenu du plan mémoire MA. Des rectangles noirs représentent des chaînes binaires invalides IC. Des rectangles blancs représentent des chaînes binaires valides C. Les chaînes binaires valides ne contiennent pas nécessairement des données écrites par le CPU et peuvent correspondre à des emplacements vierges (qui n'ont pas encore reçu de données) mais qui comportent une valeur de chaîne binaire par défaut considérée par le circuit SCT2 comme une chaîne binaire valide (par exemple une suite de 0). On distingue des chaînes binaires invalides IC situées dans la mémoire MEM2 et des chaînes binaires IC invalides situées dans la mémoire MEM3. Ces chaînes binaires invalides ont été écrites par le CPU grâce à l'instruction IWR. Par exemple, lors de l'exécution d'un calcul cryptographique impliquant le calcul d'une variable intermédiaire secrète devant être stockée dans la mémoire MEM2 ou MEM3, le programme exécutable est conçu de manière à ce que le CPU écrive une première chaîne binaire invalide immédiatement avant l'emplacement de la variable intermédiaire secrète, et une seconde chaîne binaire invalide immédiatement après la variable intermédiaire.

La figure 5 représente un mode de réalisation du circuit de sécurité SCT2. La référence "We" désigne un mot binaire W émis par un port d'entrée/sortie IOP du CPU et devant être signé au moyen d'une signature Sg générée par le circuit SCT2. La référence "Wr" désigne un mot binaire W lu dans la mémoire par l'intermédiaire du bus B1, accompagné d'une signature Sr devant être vérifiée par le circuit SCT2.

Le circuit SCT2 comprend une entrée/sortie 10 de N+M bits connectée au bus B1 et une entrée/sortie 11 de N bits connectée au port IOP du CPU. Il comprend également un circuit de signature SG1 configuré pour générer une signature valide S de M bits, un circuit de signature SG2 configuré pour générer une signature invalide IS de M bits, un multiplexeur MX à deux entrées et une sortie, un démultiplexeur DMX à une entrée et deux sorties, et un circuit de vérification de signature VCT. Le multiplexeur MX est commandé par un signal INV ("Invalid") et le démultiplexeur DMX est commandé par un signal GV ("Generate/Verify"), ces signaux étant fournis par le CPU. Les entrées sorties 10, 11 du circuit SCT2 sont appliquées sur les entrées des circuits de signature SG1, SG2. Les sorties des circuits SG1, SG2 sont appliquées au multiplexeur MX dont la sortie est appliquée à l'entrée du démultiplexeur DMX. Une première sortie du démultiplexeur DMX est appliquée à une première entrée du circuit de vérification de signature VCT et une seconde sortie du démultiplexeur DMX est reliée à l'entrée/sortie 10 du circuit SCT2, où elle est connectée aux M fils du bus B1 véhiculant une signature reçue Sr ou générée Sg. La seconde entrée du circuit de vérification de signature VCT est reliée à l'entrée/sortie 10 du circuit SCT2. La sortie du circuit de vérification de signature VCT fournit le signal d'erreur ER.

Le circuit SCT2 fonctionne de la manière suivante (les valeurs logiques des signaux INV, GV, ER sont arbitraires) :
i) Lorsque le CPU exécute une instruction WR[P,Q] :
   - le CPU exécute un prédécodage ou une préexécution de l'instruction jusqu'à connaître le mot We à écrire dans le plan mémoire MA et l'adresse où il doit être écrit,
   - le mot We est placé sur le bus B1 et se trouve à l'entrée des circuits SG1, SG2 qui fournissent respectivement une signature valide S et une signature invalide IS,
   - le CPU applique le signal INV=1 au multiplexeur MX pour sélectionner à sa sortie la signature Sg valide (Sg=S),
   - le CPU applique le signal DMX=1 au démultiplexeur DMX pour que la signature Sg valide soit aiguillée sur sa seconde sortie, connectée au bus B1 via l'entrée/sortie 10,
   - la signature valide (Sg=S) se trouve donc sur le bus B1, concaténée avec le mot We,
   - le mot We et la signature Sg sont enregistrés dans le plan mémoire MA.
ii) Lorsque le CPU exécute une instruction IWR[P,Q] :
   - le CPU exécute un prédécodage ou une préexécution de l'instruction jusqu'à connaître le mot We à écrire dans le plan mémoire MA et l'adresse où il doit être écrit,
   - le mot We est placé sur le bus B1 et se trouve à l'entrée des circuits SG1, SG2 qui fournissent respectivement une signature valide S et une signature invalide IS,
   - le CPU applique le signal INV=0 au multiplexeur MX pour sélectionner à sa sortie la signature Sg invalide (Sg=IS),
   - le CPU applique le signal DMX=1 au démultiplexeur DMX pour que la signature invalide soit aiguillée sur sa seconde sortie, connectée au bus B1 via l'entrée/sortie 10,
   - la signature invalide Sg se trouve donc sur le bus B1, concaténée avec le mot We,
   - le mot We et la signature invalide Sg sont enregistrés dans le plan mémoire MA.
iii) Lorsque le CPU exécute une instruction de lecture du plan mémoire MA :
   - le mot lu Wr accompagné de sa signature Sr sont placés sur le bus B1. Le mot Wr se trouve à l'entrée des circuits SG1, SG2 qui fournissent respectivement une signature valide S et une signature invalide IS. La signature lue Sr se trouve sur la seconde entrée du circuit de vérification de signature VCT,
   - le CPU applique le signal INV=1 au multiplexeur MX pour sélectionner à sa sortie la signature Sg valide (Sg=S),
   - le CPU applique le signal DMX=0 au démultiplexeur DMX pour que la signature Sg soit aiguillée sur sa première sortie et appliquée à la première entrée du circuit de vérification de signature VCT,
   - le circuit de vérification VCT met le signal ER à 1 (valeur active) si la signature reçue Sr est différente de la signature Sg.

Il sera noté que circuit de sécurité SCT2 peut être intégré dans le CPU et peut en tout état de cause être considéré comme une partie du CPU ou un organe de celui-ci. Sa représentation sous forme de circuit externe au CPU connectée au port IOP est donc prévue ici à des fins purement illustratives. Par ailleurs, le circuit SCT2 est susceptible de divers modes de réalisation autrement que sous forme de circuit à logique câblée. Il peut être aussi réalisé sous forme de circuit à microprogramme, de machine d'états, et de manière générale toute forme de mise en oeuvre à la portée de l'homme de l'art.

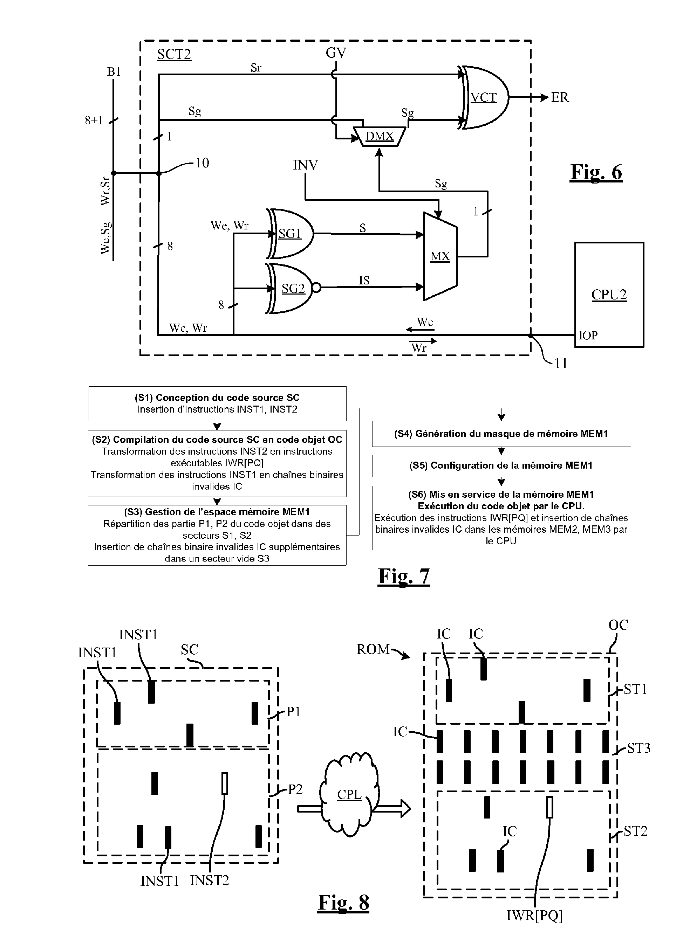

Dans un mode de réalisation du circuit SGC2 représenté sur la figure 6, le bus B1 véhicule des octets W (mots de 8 bits) et des signatures de 1 bit formant un bit de parité. Le circuit de signature SG1 est une porte OU EXCLUSIF recevant les 8 bits d'un octet W et fournissant un bit de parité formant la signature S. Le circuit de signature SG2 est une porte NON OU EXCLUSIF recevant les 8 bits d'un octet W et fournissant un bit de parité inversé formant une signature invalide IS. Le circuit de comparaison de signature VCT est une porte OU EXCLUSIF comprenant 2*8 entrées comparées deux par deux. Dans un mode de réalisation non représenté, cette porte OU EXCLUSIF à 16 entrées comprend par exemple 8 portes OU EXCLUSIF en parallèle de deux entrées chacune, agencées pour comparer deux par deux les bits de même poids des signatures Sg et Sr, et une porte OU rassemblant les sorties des 8 portes OU EXCLUSIF pour fournir le signal d'erreur ER, qui passe à 1 si deux bits de même rang ont des valeurs différentes.

De retour à la figure 4, on distingue également dans le plan mémoire MA des chaînes binaires invalides IC situées dans la mémoire morte MEM1. Celle-ci n'étant accessible qu'en lecture pour le CPU, ces chaînes binaires invalides n'ont pas été placées par le CPU mais ont été insérées dans la mémoire MEM1 au moment où le programme exécutable y a été enregistré. Dans un mode de réalisation de l'invention, des chaînes binaires invalides IC sont insérées automatiquement dans le programme exécutable au moment de sa compilation en code objet à partir d'un code source.

La figure 7 décrit des étapes générales d'un procédé de génération du programme exécutable selon l'invention et de configuration de la mémoire morte MEM1. La figure 8 illustre schématiquement ce procédé.

Le procédé comprend une étape S1 de conception du programme avec en langage de bas niveau, par exemple en langage C. Des instructions d'un premier type INST1 et des instructions d'un deuxième type INST2 sont prévues dans ce programme, qui forme le code source SC. Ce programme de bas niveau peut-être lui-même issu d'un programme écrit dans un langage de haut niveau, qui a été compilé pour obtenir le code source.

Au cours d'une étape S2, le code source SC est compilé pour obtenir un code objet OC signé exécutable par le CPU. Le code objet comprend des instructions et des variables pourvues de signatures S, chaque instruction ou variable formant une ou plusieurs chaînes binaires valides. Durant cette étape, le compilateur CPL est configuré pour transformer les instructions INST1 en chaînes binaires invalides IC insérées dans le code objet OC, et transformer les instructions INST2 en instructions exécutables IWR[PQ] telles que décrites plus haut, faisant partie du code objet et formant donc des chaînes binaires valides.

Une étape optionnelle S3 de gestion de l'espace mémoire est ensuite prévue. Cette étape peut être conduite par le compilateur CPL ou par un programme de gestion de l'espace mémoire intervenant après le compilateur. Durant cette étape, le code objet est distribué dans différents secteurs de l'espace mémoire disponible dans la mémoire MEM1. Dans l'exemple représenté sur la figure 8, le code source SC comporte deux parties distinctes P1, P2, par exemple le système d'exploitation et la couche d'abstraction matérielle d'une part, et des programmes d'application d'autre part. Un secteur ST1 de l'espace mémoire disponible est alloué à la partie P1 et un secteur ST2 l'espace mémoire est alloué à la partie P2. Ce faisant, il peut arriver qu'un secteur ST3 de la mémoire MEM1 ne soit pas utilisé, par exemple un secteur situé entre les secteurs ST1 et ST2.

Dans un mode de réalisation du procédé, le compilateur ou le programme en charge de la gestion de l'espace mémoire est configuré pour insérer des chaînes binaires invalides IC supplémentaires dans le secteur ST3, au lieu de le laisser vierge. Bien que ce secteur ST3 ne contienne pas de données secrètes, les chaînes binaires invalides qui y sont enregistrées permettent de contrer une tentative de vidage de la mémoire passant par, ou centrée sur le secteur vide S3, et offrent donc une protection supplémentaire.

Au cours d'une étape S4, un masque de mémoire ROM est généré. Ce masque est une représentation du code objet sous forme topographie de semi-conducteur ou "layout", par exemple sous forme d'un ensemble de lignes de mots et de lignes de bits interconnectées de manière sélective par des transistors.

Au cours d'une étape S5, la mémoire MEM1 est configurée au moyen du masque.

Au cours d'une étape S6, la mémoire est mise en service, et le CPU exécute le code objet qu'elle comporte. Cette exécution inclut l'exécution des instructions IWR[PQ] insérées dans le code objet, qui conduisent le CPU à insérer des chaînes binaires invalides IC dans la mémoire MEM2 ou MEM3 de la manière décrite plus haut.

Il apparaîtra clairement à l'homme de l'art que le procédé qui vient d'être décrit n'est pas seulement applicable à une mémoire morte. Le programme exécutable peut également être enregistré dans une mémoire programme de type effaçable et programmable électriquement, par exemple une mémoire FLASH. Dans ce cas, l'étape de production du masque est supprimée et le code objet est directement programmé dans la mémoire programme.

De même, le procédé d'écriture de chaînes binaires invalides dans les mémoires MEM2 et MEM3 décrit plus haut peut s'appliquer à divers autres types de mémoire effaçables et programmables électriquement, volatiles ou non volatiles.

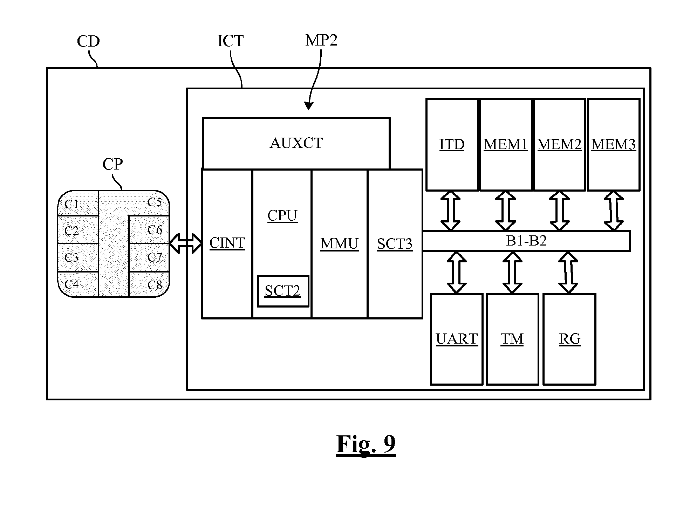

La figure 9 représente un exemple d'application du microprocesseur MP2 selon l'invention. Celui-ci comporte en sus du CPU et des mémoires MEM1 à MEM3, une interface de communication CINT, une unité de gestion mémoire MMU, un circuit de sécurité SCT3, une circuiterie auxiliaire AUXCT (capteur de grandeur physique, générateurs de signaux, oscillateur, etc.), et des éléments périphériques reliés aux bus B1, B2. Les éléments périphériques comprennent par exemple un décodeur d'interruption ITD, un émetteur-récepteur asynchrone universel UART, une minuterie TM ("timer"), et un générateur RG de nombres aléatoires ou pseudo-aléatoires. Le circuit de sécurité SCT3 est par exemple un circuit de cryptographie que le CPU utilise pour crypter certaines données enregistrées dans les mémoires MEM2, MEM3 et/ou pour s'authentifier auprès d'un terminal lors d'une transaction.

Ces éléments sont intégrés dans une microplaquette de semi-conducteur formant un circuit intégré ICT. Le circuit intégré est monté dans une carte plastique CD équipée de contacts CP, par exemple des contacts ISO7816, auxquels l'interface de communication CINT est reliée. L'ensemble forme une carte à puce susceptible de diverses applications. L'interface de communication CINT peut également être de type sans contact, équipée d'une bobine d'antenne RF ou une antenne UHF.

## Revendications

1. Microprocesseur (MP2) comprenant une mémoire (MA, MEM1, MEM2, MEM3) et une unité centrale de traitement (CPU, SCT2) configurée pour :
lors de l'écriture d'un mot binaire (W, We) dans la mémoire, générer une signature (S, Se) et écrire le mot binaire accompagné de la signature dans la mémoire, et
lors de la lecture d'un mot binaire (W, Wr) dans la mémoire, vérifier la signature (S, Sr) accompagnant le mot binaire et, si la signature est invalide, déclencher une action de protection (ER) de la mémoire,
**caractérisé en ce que** l'unité centrale est configurée pour exécuter une instruction (IWR[P,Q]) d'écriture dans une zone mémoire d'un mot binaire (W, We) accompagné d'une signature invalide (IS), afin qu'une lecture ultérieure de la zone mémoire par l'unité centrale déclenche l'action de protection.

2. Microprocesseur selon la revendication 1, dans lequel la mémoire est une mémoire volatile (MEM2) ou non volatile (MEM3) programmable et effaçable électriquement.

3. Microprocesseur selon l'une des revendications 1 et 2, comprenant un circuit de sécurité (SCT2) configuré pour générer une signature valide (S) ou une signature invalide (IS) à la demande de l'unité centrale.

4. Microprocesseur selon l'une des revendications 1 à 3, dans lequel la signature comprend au moins un bit de parité qui est fonction de tout ou partie des bits du mot binaire à signer.

5. Dispositif portatif électronique (CD) comprenant un circuit intégré sur plaquette de semi-conducteur (ICT), dans lequel le circuit intégré comprend un microprocesseur (MP2) selon l'une des revendications 1 à 4.

6. Procédé de protection d'un microprocesseur (MP2) comprenant une mémoire (MA, MEM1, MEM2, MEM3) et une unité centrale de traitement (CPU, SCT2), comprenant les étapes consistant à :
lors de l'écriture d'un mot binaire (W, We) dans la mémoire, générer une signature (S, Se) et écrire le mot binaire accompagné de la signature dans la mémoire, et
lors de la lecture d'un mot binaire (W, Wr) dans la mémoire, vérifier la signature (S, Sr) accompagnant le mot binaire et, si la signature est invalide, exécuter une action de protection (ER) de la mémoire,
**caractérisé en ce qu'**il comprend en outre une étape consistant à écrire dans une zone mémoire un mot binaire (W, We) accompagné d'une signature invalide (IS), de telle sorte qu'une lecture ultérieure par l'unité centrale de la zone mémoire déclenche l'action de protection.

7. Procédé selon la revendication 6, dans lequel la mémoire est une mémoire morte (MEM1) comprenant un programme exécutable par l'unité centrale, et comprenant une étape consistant à préenregistrer dans la mémoire le mot binaire accompagné d'une signature invalide, avant la mise en service de la mémoire.

8. Procédé selon la revendication 6, dans lequel la mémoire (MEM2, MEM3) est une mémoire programmable et effaçable électriquement, volatile ou non volatile, et comprenant une étape consistant à utiliser l'unité centrale pour écrire dans la mémoire le mot binaire accompagné d'une signature invalide.

9. Procédé selon la revendication 8, comprenant une étape préliminaire consistant à insérer dans un programme (OC) exécuté par l'unité centrale au moins une instruction d'écriture (IWR[P,Q]) dans la mémoire d'un mot binaire accompagné d'une signature invalide.

10. Procédé selon l'une des revendications 6 à 9, dans lequel la signature comprend au moins un bit de parité qui est fonction de tout ou partie des bits du mot binaire à signer.

11. Procédé selon l'une des revendications 6 à 10, dans lequel l'action de protection comprend au moins l'une des actions suivantes : déclenchement d'une interruption et exécution d'un programme de traitement d'erreur; remise à zéro de l'unité centrale; effacement de tout ou partie de la mémoire; mise hors service temporaire ou définitive de l'unité centrale; mise hors service temporaire ou définitive de tout ou partie la mémoire.

12. Procédé de configuration d'une mémoire programme non volatile (MEM1) intégrée dans un microprocesseur selon l'une des revendications 1 à 4, comprenant les étapes consistant à :
- concevoir un programme sous forme de code source (SC),
- transformer le programme en code source en un programme en code objet (OC) exécutable par un microprocesseur,
- générer des signatures (S) et les associer aux mots binaires, et
- enregistrer le code objet signé dans la mémoire,
**caractérisé en ce qu'**il comprend une étape d'insertion dans une zone de la mémoire d'au moins un mot binaire accompagné d'une signature invalide, de manière qu'une lecture ultérieure de la zone mémoire par l'unité centrale du microprocesseur déclenche une action de protection de la mémoire.

13. Procédé selon la revendication 12, comprenant les étapes consistant à :
- insérer dans le code source au moins une instruction d'un premier type (INST1), et
- au moment de la transformation du code source en code objet, exécuter l'instruction du premier type en insérant dans le code objet le mot binaire accompagné de la signature invalide.

14. Procédé selon l'une des revendications 12 à 13, comprenant une étape (S3) de répartition du code objet dans la mémoire, en laissant au moins une zone mémoire vide, et une étape de génération de mots binaires accompagnés de signatures invalides, et de placement des mots binaires accompagnés des signatures invalides dans la zone mémoire vide.

15. Procédé selon l'une des revendications 12 à 14, comprenant les étapes consistant à :
- insérer dans le code source au moins une instruction d'un second type (INST2), et
- au moment de la transformation du code source en code objet, transformer l'instruction du second type en une instruction exécutable (IWR[PQ]) d'écriture dans une mémoire d'un mot binaire accompagné d'une signature invalide.
